Europäisches Patentamt

European Patent Office

Office européen des brevets

(19)

(11) Publication number: **0 149 886**
**A2**

(12) # EUROPEAN PATENT APPLICATION

(21) Application number: **84307101.0**

(22) Date of filing: **17.10.84**

(51) Int. Cl.⁴: **H 01 S 3/06**
**H 01 S 3/30, H 01 S 3/091**

(30) Priority: **16.12.83 GB 8333611**

(43) Date of publication of application:
**31.07.85 Bulletin 85/31**

(84) Designated Contracting States:
**AT BE CH DE FR IT LI LU NL SE**

(71) Applicant: **STANDARD TELEPHONES AND CABLES
PUBLIC LIMITED COMPANY
190 Strand
London, WC2R 1DU(GB)**

(72) Inventor: **Byron, Kevin Christopher
8, Jervis Road
Bishops Stortford Hertfordshire(GB)**

(74) Representative: **Dennis, Mark Charles
STC Patent Department Edinburgh Way
Harlow Essex CM20 2SH(GB)**

(54) Optical amplifiers.

(57) Amplification in an optical fibre transmission system at a wavelength $\lambda_s$ is obtained by coupling the fibre of the transmission system to the input of a single-crystal fibre laser (1), the output of which is coupled to a length of optical fibre (2) comprising an amplifier fibre. The single-crystal fibre laser and amplifier fibre comprise an optical amplifier. The fibre laser is pumped by LEDs (3) and emits pump signals at a wavelength $\lambda_p$, the signal wavelength $\lambda_5$ being one Stokes shift away from the pump wavelength $\lambda_s$. When the power emerging from the fibre laser at wavelength $\lambda_p$ is large enough, the pump signal interacts with the signal of wavelengths $\lambda_s$ in the amplifier fibre (2) and gain is obtained at the signal wavelength $\lambda_s$.

EP 0 149 886 A2

OPTICAL AMPLIFIERS

This invention relates to optical amplifiers, and in particular to means for amplifying an optical signal without having to convert it to an electrical signal.

According to the present invention there is provided an optical amplifier comprising a length of optical fibre, a single-crystal fibre laser having an output end coupled to the optical fibre, and means for pumping the fibre laser whereby it emits an optical signal at a first wavelength, wherein in use an optical signal to be amplified and at a second wavelength is applied to the input end of the fibre laser, gain in the optical signal to be amplified being achievable in the optical fibre in dependence on the pump power, the second wavelength being one Stokes shift away from the first wavelength.

Embodiments of the invention will now be described with reference to the accompanying schematic drawing of an optical fibre amplifier.

Stimulated Raman scattering in low loss optical fibre waveguides has attracted considerable attention owing to the high efficiency of generation of multiple Stokes frequency shifts. The effect has been utilised to provide a pulsed tunable source for fibre diagnostic measurements (Cohen L.G. and Lin C., "A universal fibre optical (UFO) measurement system based on a new IR fibre Raman laser" IEEE J. Quantum Electron, 1979, 14, p.855) but the direct application of this mechanism for producing amplification of the transmitted signal in a fibre has only recently been investigated. Results have been obtained showing substantial amplification in $GeO_2$ doped $SiO_2$ fibres at various wavelengths, for example, 1.24 microns (Desurvire E., Papuchon M., Pocholle J.P. and Raffy J., "High-gain optical amplification of laser diode signal by Raman scattering in single-mode fibres". Electronics Letters 1983, Vol.19, 19, p.751).

A major feature in the design of optical fibre communications systems is the necessity to employ signal repeaters (regenerators) at intervals. If, however, the optical signal can be amplified optically by applying a pump signal to induce stimulated Raman scattering at an end of the link the length of the link between any necessary regenerators can be greatly extended, and in fact long haul repeaterless links become feasible.

The amplification mentioned above at 1.24 microns was based on the use of a pump signal generated by a Q-switched YAG (yttrium aluminium garnet) laser at a pump power level between 0.5 and 5W, a forward Raman gain of 45dB being measured at 2W. We have found that gain can be obtained at very much lower pump power levels, such as those provided by semiconductor lasers. In our co-pending UK Application No.83 33610 (Serial No.       (K.C. Byron 5) we have proposed an optical amplifier comprised by a semiconductor laser, with appropriate drive circuitry to provide a pulsed output, which is used as a pump, a coupler wherein an optical signal to be amplified is coupled with a pump signal output from the semiconductor laser, and a length of optical fibre comprising an amplifier fibre. The wavelength of the signal is, preferably, one Stokes shift away from that of the pump signal. In the amplifier fibre, the pump signal and the signal to be amplified interact, producing gain, the amount of which is determined by various factors including the pump power and the length, loss and material of the amplifier fibre.

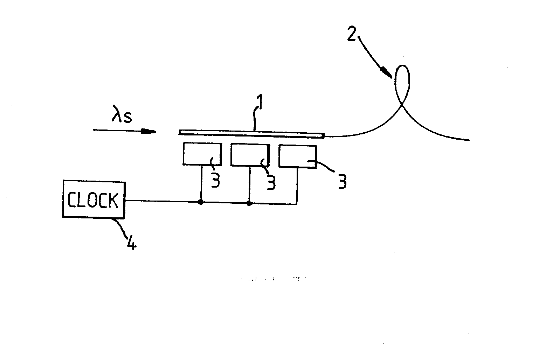

Instead of using semiconductor lasers and couplers as proposed in our co-pending application, the present application proposes an optical amplifier employing a

0149886

single crystal fibre laser. An embodiment of crystal fibre amplifier is illustrated somewhat schematically in the accompanying drawing. A length of single-crystal fibre 1, for example neodymium doped YAG (yttrium aluminium garnet) is coupled at one end (its output end) to a length of optical fibre 2 comprising an amplifier fibre. The amplifier may be comprised, for example, of single mode $SiO_2$ or $GeO_2$ doped $SiO_2$ fibre. Disposed along the side of the single-crystal fibre 1 are a plurality of light-emitting diodes 3 (LEDs), three diodes being shown in the drawing. The LEDs 3 are coupled together and to drive means therefor including a clock 4 so that the LEDs are actuated simultaneously and produce light pulses simultaneously. Thus the fibre 1 is side-pumped by a plurality of LEDs 3. The LEDs could be driven C.W. also.

Amplification of an optical signal at a wavelength $\lambda_s$ in an optical fibre transmission system is achieved by means of the optical fibre amplifier of the present invention by coupling the fibre transmission (not shown) to the other (input) end of the single-crystal fibre 1, as illustrated schematically in the drawing. The fibre 1 is· pumped by the LEDs 3 and is arranged to emit an optical pump at a wavelength $\lambda_p$ the signal to be amplified $\lambda_s$, being one Stokes shift away from this wavelength $\lambda_p$. When the power emerging from the crystal fibre is large enough the pump signal and the optical signal to be amplified interact within the amplifier fibre 2 and amplification (gain) is achieved in the optical signal of wavelength $\lambda_s$. The single-crystal fibre 1 together with the LEDs comprise a single-crystal fibre laser, which is side pumped by a plurality of LEDs in the embodiment shown.

Typically the single-crystal fibre 1 is comprised by a mm or so length of neodymium doped YAG, the amplifier fibre 2 comprises a 1 Km or so length of $GeO_2$ doped $SiO_2$ single mode fibre or possibly 1.55 microns, the pump wavelength is 1300nm (a wavelength at which optical fibres have been made with extremely low losses) and the signal wavelength is 1330nm one Stokes shift away, a gain of 15dB

- 4 -

0149886

being achievable at a pump power of 140mw. It has been shown that for an optimum gain there is for a given loss in the amplifier fibre a critical length.

The optical fibre amplifier arrangement of the present invention may be employed with optical transmission links in order to increase the length of links between any necessary regenerators, and provides the possibility of long haul repeaterless links.

Whereas neodymium doped YAG has been described above as comprising the material of the single-crystal fibre, other materials are possible, for example Neodymium doped $Y_2O_3$. Whereas use of a side-pumped single-crystal fibre laser has been described, an optical amplifier may alternatively be comprised by a single-crystal fibre end-pumped by a single LED together with a suitable length of amplifier fibre.

CLAIMS:-

1.      An optical amplifier characterised by a length of optical fibre (2), a single-crystal fibre laser (1) having an output end coupled to the optical fibre, and means (3,4) for pumping the fibre laser whereby it emits an optical signal at a first wavelength ($\lambda_p$), wherein in use an optical signal to be amplified and at a second wavelength ($\lambda_s$) is applied to the input end of the fibre laser, gain in the optical signal to be amplified being achievable in the optical fibre in dependence on the pump power, the second wavelength ($\lambda_s$) being one Stokes shift away from the first wavelength ($\lambda_p$).

2.      An optical amplifier as claimed in claim 1, characterised in that the single-crystal fibre laser (1) is side-pumped by a plurality of simultaneously actuated light emitting diodes (3).

3.      An optical amplifier as claimed in claim 1 or claim 2, characterised in that the single-crystal fibre laser (1) is comprised of neodymium doped yttrium aluminium garnet.

4.      An optical amplifier as claimed in any one of the preceding claims, characterised in that the optical fibre (2) is comprised of monomode $SiO_2$ or $GeO_2$ doped $SiO_2$ fibre.

0149886